# EUROPÄISCHE PATENTANMELDUNG

(11) **EP 4 254 096 A1**
(43) Veröffentlichungstag der Anmeldung: **04.10.2023**
(21) Anmeldenummer: 22165724.0
(22) Anmeldetag: 31.03.2022
(51) Int. Cl.: G05B 19/05

(54) **VERFAHREN ZUR IMPLEMENTIERUNG EINER AUTOMATISIERUNGSFUNKTIONALITÄT AUF EINER AUTOMATISIERUNGSKOMPONENTE MIT PROGRAMMIERBARER AUTOMATISIERUNGSFUNKTIONALITÄT UND SYSTEM**

(71) Anmelder: Siemens Aktiengesellschaft, 80333 München (DE)
(72) Erfinder: Falk, Rainer, 85586 Poing (DE); Feist, Christian Peter, 80689 München (DE); Pfau, Axel, 80333 München (DE); Pyka, Stefan, 85570 Markt Schwaben (DE); Schneider, Daniel, 80796 München (DE); Sperl, Franz, 92526 Oberviechtach (DE)
(74) Vertreter: Siemens Patent Attorneys

(57) **Zusammenfassung**

Bei dem Verfahren zur Implementierung einer Automatisierungsfunktionalität auf einer Automatisierungskomponente mit programmierbarer Automatisierungsfunktionalität umfasst die Automatisierungsfunktionalität eine Sensor- und/oder Aktor-Funktionalität, wobei bei dem Verfahren eine Integritätsinformation der Automatisierungskomponente, welche eine Information über eine Integrität der Automatisierungskomponente enthält, erfasst wird und bei welchem abhängig von der Integritätsinformation die Implementierung ausgeführt wird.

## Beschreibung

Die Erfindung betrifft ein Verfahren zur Implementierung einer Automatisierungsfunktionalität auf einer Automatisierungskomponente mit programmierbarer Automatisierungsfunktionalität und ein System, insbesondere eine Vorrichtung, mit einer Automatisierungskomponente mit programmierbarer Automatisierungsfunktionalität.

Heutige Automatisierungssysteme nutzen regelmäßig generische, durch einen Anwender rekonfigurierbare, hardwarebasierte Automatisierungskomponenten wie insbesondere speicherprogrammierbare Steuerungen ("Programmable Logic Controller") oder projektierbare, d. h. konfigurierbare, Steuergeräte, etwa PID-Regler mit konfigurierbaren Regelparametern. Die Automatisierungsfunktionalität solcher Automatisierungskomponenten kann durch einen Anwender durch Laden von Automatisierungsdaten, hier Automatisierungsdaten zur Projektierung und/oder Rezeptur, rekonfiguriert werden, sodass diese Automatisierungsdaten die vorgesehene Automatisierungsfunktionalität realisieren. Das Laden kann allgemein mehrstufig erfolgen. Insbesondere können zunächst eine Projektierung, dann Funktionsbausteinen/Bibliotheken, und separat eine Rezeptur zur weiteren Anpassung der Projektierung an einen spezifischen Produktionsauftrag geladen werden.

Allerdings stellen Automatisierungsdaten stellen häufig ein betriebskritisches Know-How dar. Daher unterstützen Automatisierungskomponenten Know-How-Schutz-Verfahren, die ein unzulässiges Auslesen oder Kopieren von Automatisierungsdaten verhindern. Solche Know-How-Schutz-Verfahren können auf Hardware-basierten Automatisierungskomponenten verlässlich umgesetzt werden. Allerdings funktionieren solche Know-How-Schutzverfahren auf offenen Plattformen nicht notwendigerweise sicher.

Es ist daher eine Aufgabe der Erfindung, ein verbessertes Verfahren zur Implementierung einer Automatisierungsfunktionalität auf einer Automatisierungskomponente mit programmierbarer Automatisierungsfunktionalität und ein verbessertes System mit einer Automatisierungskomponente mit programmierbarer Automatisierungsfunktionalität anzugeben, bei welchem insbesondere der Know-How-Schutz zuverlässiger umgesetzt werden kann.

Diese Aufgabe der Erfindung wird mit einem Verfahren mit den in Anspruch 1 angegebenen Merkmalen sowie mit einem System mit den in Anspruch 7 angegebenen Merkmalen gelöst. Bevorzugte Weiterbildungen der Erfindung sind in den zugehörigen Unteransprüchen, der nachfolgenden Beschreibung und der Zeichnung angegeben.

Das erfindungsgemäße Verfahren ist ein Verfahren zur Implementierung einer Automatisierungsfunktionalität auf einer Automatisierungskomponente, welche eine programmierbare Automatisierungsfunktionalität aufweist, d. h. deren Automatisierungsfunktionalität programmierbar ist, wobei mittels der Programmierung die Implementierung der Automatisierungsfunktionalität erfolgt. Dabei umfasst die Automatisierungsfunktionalität eine Sensor- und/oder Aktor-Funktionalität, wobei bei dem erfindungsgemäßen Verfahren eine Integritätsinformation der Automatisierungskomponente, welche eine Information über die Integrität der Automatisierungskomponente enthält, erfasst wird und wobei abhängig von der Integritätsinformation die Implementierung ausgeführt wird.

Bei dem erfindungsgemäßen Verfahren ist die Automatisierungskomponente bevorzugt derart programmierbar, dass die Automatisierungskomponente konfigurierbar und/oder projektierbar ist.

Bei dem erfindungsgemäßen Verfahren gibt die Integritätsinformation die Integrität der Automatisierungskomponente an. Insbesondere charakterisiert die Integritätsinformation die Manipulationsfreiheit und/oder Manipulationssicherheit der Automatisierungskomponente. Auf diese Weise kann die Automatisierungsfunktionalität vorteilhaft dann implementiert werden, wenn die Integritätsinformation ein hinreichend hohes Maß an Manipulationsfreiheit und/oder Manipulationssicherheit anzeigt. Bevorzugt erfolgt bei dem erfindungsgemäßen Verfahren die Implementierung der Automatisierungsfunktionalität dann, wenn die Integritätsinformation ein hinreichend hohes Maß an Manipulationsfreiheit und/oder eine hinreichend hohe Wahrscheinlichkeit für eine Manipulationsfreiheit und/oder eine hohe Manipulationssicherheit aufweist.

Mittels des erfindungsgemäßen Verfahrens kann zunächst die Integrität der Automatisierungskomponente geprüft werden, bevor die Automatisierungsfunktionalität und damit verbundenes Know-how auf der Automatisierungskomponente implementiert wird. Mittels des erfindungsgemäßen Verfahrens ist also die konkrete Ausgestaltung der Automatisierungsfunktionalität und somit vorteilhaft ein zu schützendes Know-how, welches in der Automatisierungsfunktionalität verkörpert ist, geschützt. Folglich ist mittels des erfindungsgemäßen Verfahrens der Know-how-Schutz deutlich verbessert.

Die Erfindung beruht also maßgeblich auf dem Umstand, dass Beeinträchtigungen der Integrität, d. h. Manipulationen, der Automatisierungskomponente erkannt werden. Allgemein erlaubt die Integritätsinformation einen Rückschluss auf die Vertrauenswürdigkeit der Automatisierungskomponente. Die Integritätsinformation kann bei dem erfindungsgemäßen Verfahren eine binäre Information, insbesondere "OK" oder "nicht OK", darstellen oder eine Integritätsstufe, etwa "niedrig", "mittel" oder "hoch" oder eine qualitative Information wie "Original-Firmware geladen" oder "manipuliert" oder "rooted" umfassen. Dabei bedeutet "rooted" vorliegend, dass ein Anwender Root-Rechte, d. h. Administrator-Rechte, der Automatisierungskomponente innehat.

Die Integritätsinformation kann die Firmware oder Software eines Prozessors und/oder eine Firmware von einer oder mehreren Peripheriekomponenten der Automatisierungskomponente betreffen. Solche Peripheriekomponenten können insbesondere mindestens ein Netzwerkadapter und/oder ein Grafikprozessor und/oder ein Kommunikations-Co-Prozessor und/oder ein Ansteckmodul sein. Ferner kann die Integritätsinformation Kalibrierungsdaten insbesondere mindestens eines Sensors und/oder mindestens eines Aktors betreffen und/oder Konfigurationsdaten und/oder eine Originalität von mindestens einer Hardwarekomponente und/oder mindestens einer Hardwarebaugruppe angeben. Zusätzlich oder alternativ kann die Integritäts-information eine Bewertung einzelner Softwarekomponenten, insbesondere einer Firmware und/oder eines Bootloaders und/oder eines Betriebssystems und /oder einer App-Laufzeitumgebung und oder einer laufenden oder installierten App angeben. Dabei kann die Integritätsinformation auch eine Identifikationsinformation, also eine Kennung, der Softwarekomponente wie vorzugsweise eine Versionsnummer und/oder eine UUID und/oder einen Hash-Wert umfassen.

Unter einer Automatisierungsfunktionalität ist im Rahmen der vorliegenden Erfindung eine solche Automatisierungsfunktionalität zu verstehen, mittels welcher die Automatisierungskomponente über mindestens einen Aktor auf die reale physikalische Welt einwirkt und/oder mittels welcher die Automatisierungskomponente mittels Sensoren Informationen und/oder Messdaten über die reale physikalische Welt erfasst.

Zweckmäßig wird bei dem erfindungsgemäßen Verfahren die Integritätsinformation von einem einzelnen Integritätserfassungsmodul bereitgestellt. Alternativ oder zusätzlich kann sich die Integritätsinformation auch aus einer Kombination mehrerer Integritätsinformationen ergeben, die von mehreren Integritätserfassungsmodulen ermittelt werden, die der Automatisierungskomponente jeweils zugeordnet sind. Optional und ebenfalls vorteilhaft können Integritätsinformationen mehrerer Automatisierungskomponenten eines Automatisierungssystems zusammengefasst werden. In dieser Weiterbildung der Erfindung ist es vorzugsweise möglich, dass neben einer Integritätsinformation einer ersten Automatisierungskomponente zumindest eine Integritätsinformation einer weiteren Automatisierungskomponente berücksichtig werden kann, um zu entscheiden, ob die die Automatisierungsfunktionalität auf der ersten Automatisierungskomponente implementiert werden kann oder nicht.

Bevorzugt erfolgt bei dem erfindungsgemäßen Verfahren die Implementierung der Automatisierungsfunktionalität mittels einer Bereitstellung von Automatisierungsdaten und die Bereitstellung der Automatisierungsdaten erfolgt mittels einer Bereitstellung im Klartext oder mittels einer Entschlüsselung bereits vorliegender verschlüsselter Automatisierungsdaten oder mittels einer Bereitstellung eines Entschlüsselungsschlüssels zur Entschlüsselung bereits vorliegender verschlüsselter Automatisierungsdaten.

Die Automatisierungsfunktionalität wird in dieser Weiterbildung der Erfindung durch das Laden von Automatisierungsdaten definiert oder zumindest beeinflusst. Erfindungsgemäß können bei dem Verfahren die Automatisierungsdaten an eine Integrität der Automatisierungskomponente gebunden werden. Auf diese Weise kann eine geforderte Integritätsinformation, welche für ein Implementieren der Automatisierungsfunktionalität erforderlich ist, spezifisch für die jeweilige Automatisierungsfunktionalität gewählt und mit den Automatisierungsdaten für diese Automatisierungsfunktionalität verknüpft werden.

Automatisierungsdaten im Sinne dieser Erfindung bilden solche Automatisierungsdaten, welche die Automatisierungsfunktionalität, insbesondere wie vorhergehend erläutert, realisieren. Automatisierungsdaten umfassen insbesondere Projektierungsdaten und/oder Rezepturdaten und/oder mindestens einen Funktionsblock und/oder mindestens eine App. Mittels geeigneter Automatisierungsdaten kann ein Anwender die gewünschte Automatisierungsfunktionalität auf der Automatisierungskomponente realisieren. Die Information zu der geforderten Integritäts-information kann in den Automatisierungsdaten bevorzugt direkt enthalten und damit den Automatisierungsdaten zugeordnet sein, oder sie kann als eine separate Information vorliegen, die, insbesondere mittels eines Verweises oder einer Referenz, den betroffenen Automatisierungsdaten bevorzugt zugeordnet ist. Die Zuordnung kann sich allgemein auf Automatisierungsdaten beziehen, vorzugsweise auf eine einzelne Instanz von Automatisierungsdaten, die insbesondere mittels einer URI ("Uniform Ressource Identifier") und/oder URL ("Uniform Ressource Locator") und/oder einer UUID ("Universally Unique Identifier") und/oder eines Hash-Werts der Automatisierungsdaten identifiziert sein kann. Die Zuordnung kann sich alternativ und ebenfalls vorteilhaft auf bestimmte Arten von Automatisierungsdaten beziehen, zweckmäßig abhängig von einem Anbieter der Automatisierungsdaten und/oder abhängig von einem Anbieter und/oder Typ der Automatisierungskomponente oder abhängig von der durch die Automatisierungsdaten definierten Funktionalität, insbesondere einer Safety-Funktionalität.

Vorzugsweise ist bei dem erfindungsgemäßen Verfahren die Automatisierungskomponente eine Hardwarekomponente. Alternativ und ebenfalls bevorzugt ist bei dem erfindungsgemäßen Verfahren die Automatisierungskomponente eine virtualisierte Softwarekomponente.

Die aktuelle Integritätsinformation kann bei dem erfindungsgemäßen Verfahren durch die Automatisierungskomponente selbst ermittelt werden, insbesondere im Falle einer hardwarebasierten Automatisierungskomponente, etwa mittels eines integrierten Integritätserfassungsmoduls. Alternativ und ebenfalls vorteilhaft kann ein separates Integritätserfassungsmodul vorgesehen sein, welches die Integritätsinformation der Automatisierungskomponente und/oder einer Compute-Plattform, auf der sie ausgeführt wird, erfasst. Insbesondere bei einer software-basierten, virtualisierten Automatisierungskomponente wird mittels eines separaten, vorzugsweise ebenfalls softwarebasierten, Integritätserfassungsmoduls die Integritätsinformation derjenigen Compute-Plattform ermittelt, auf der die Automatisierungskomponente ausgeführt wird.

Die Automatisierungskomponente kann wie bereits beschrieben allgemein hardwarebasiert oder virtualisiert, d. h. softwarebasiert, realisiert sein. Der erfindungsgemäß realisierte Know-how-Schutz kann in einer Variante auf einem herkömmlichen hardwarebasierten Automatisierungsgerät, etwa einem als Hardware realisierten speicherprogrammierbaren Bautein, auch als "Programmable Logic Controller" bezeichnet, insbesondere einer "Siemens SIMATIC S7-1500", umgesetzt werden. Dazu weist der speicherprogrammierbare Baustein ein Integritätserfassungsmodul auf, welches eine aktuelle Integritätsinformation der Automatisierungskomponente, insbesondere in der Art eines Security-Runtime-Health-Status, erfasst. Neben dem speicherprogrammierbaren Baustein selbst können optional auch Erweiterungsmodule in die Erfassung der Integritätsinformation einbezogen werden. Zweckmäßig wird das erfindungsgemäße Verfahren derart durchgeführt, dass eine entsprechend geschützte Automatisierungsfunktionalität in Gestalt ladbarer Automatisierungsdaten nur auf einer solchen Automatisierungskomponente verwendet werden kann, die einer vorgegebenen Integritäts-information genügt. Somit kann eine Automatisierungsfunktionalität, d. h. ein entsprechend geschütztes Automatisierungs-Programm oder ein entsprechender Block von Automatisierungsdaten, nur auf einer zulässigen Automatisierungskomponente implementiert und verwendet werden. Die Möglichkeit zur Implementierung der Automatisierungsfunktionalität hängt hierbei also nicht von einem Produktkennzeichen oder einer Serienbezeichnung wie einer Seriennummer ab, sondern die Möglichkeit der Implementierung hängt stattdessen von der Integritätsinformation der Automatisierungskomponente ab.

Das erfindungsgemäße Verfahren kann optional und ebenfalls vorteilhaft wie oben bereits beschrieben mittels einer virtualisierten Automatisierungskomponente ausgeführt werden, bei der ein speicherprogrammierbarer Logikbaustein auf einer offenen Compute-Plattform ausgeführt wird. Bei dem erfindungsgemäßen Verfahren kann ein OT-Betreiber grundsätzlich Zugriff auf die offene Compute-Plattform behalten, etwa als Root oder als Administrator. Aufgrund des erfindungsgemäßen Verfahrens ist das Risiko bei einer solchen offenen Compute-Plattform gegenüber einer hardwarebasierten Automatisierungskomponente nicht notwendigerweise erhöht.

Das Integritätserfassungsmodul kann bei einem auf einer offenen Compute-Plattform realisierten Automatisierungsmoduls auch als Runtine-Health-Check-Modul oder als "Zero Trust Agent" oder als "Platform Trustworthiness Agent" bezeichnet werden. Mittels des Integritätserfassungsmoduls kann bestätigt werden, dass diese Compute-Plattform als integer und damit als hinreichend vertrauenswürdig gilt oder zumindest eine Integritäts-Information als Rohinformation oder vorverarbeitete Integritätsinformation zur Bewertung der Vertrauenswürdigkeit bereitgestellt werden. Abhängig von der Integritäts-information werden der virtualisierten Automatisierungskomponente auf dieser Compute-Plattform Automatisierungsdaten oder ein kryptographischer Schlüssel zum Entschlüsseln von verschlüsselten Automatisierungsdaten bereitgestellt. Das Bereitstellen kann insbesondere mittels eines Lade-Server erfolgen, der über ein Datenkommunikationsnetzwerk, insbesondere Ethernet, WLAN und/oder ein 5G-Netzwerk, mit der Automatisierungskomponente und/oder oder der Compute-Platform, auf der die ggf. virtuelle Automatisierungskomponente ausgeführt wird, verbunden ist. Wenn das Bereitstellen der Automatisierungsdaten mittels eines Lade-Server erfolgt und dem Lade-Server die Integritätsinformation übermittelt wird, wird bei dem erfindungsgemäßen Verfahren zweckmäßig sichergestellt, dass eine ungerechtfertigte, insbesondere manipulierte, Integritätsinformation vom Lade-Server erkannt wird, vorzugsweise mittels einer kryptographischen Signatur oder mittels einer kryptographischen Verschlüsselung.

Das Integritätserfassungsmodul kann die Integrität der eigentlichen Compute-Plattform überprüfen. Dazu gehören insbesondere das Betriebssystem der Compute-Plattform, sowie eine App-Laufzeitumgebung und/oder eine Container-Laufzeitumgebung. Weiterhin kann die Integrität von Plattform-Komponenten, insbesondere einer Firmware von Speichermedien wie SSD-Speichern und/oder von Grafikkarten und/oder von AI-Beschleunigerkarten und/oder Netzwerkkarten, und/oder die Integrität von Plattform-Management-Funktionen überprüft werden. Ebenso kann eine Realisierung des Integritätserfassungsmoduls selbst als virtualisiertes Integritätserfassungsmodul auf der Compute-Plattform erfolgenund die Überprüfung der Integritätsinformation innerhalb einer virtualisierten Automatisierungskomponente auf eine gleichartige Weise erfolgen wie oben für ein hardwarebasiertes Automatisierungsgerät beschrieben. Die Integrität des Integritätserfassungsmoduls selbst wird idealerweise beim Booten der Compute-Plattform überprüft, etwa mittels eines Secure-Boot-Prozesses.

In einer vorteilhaften Weiterbildung des erfindungsgemäßen Verfahrens umfasst die Automatisierungsfunktionalität das Auswerten eines Sensor-Signals und/oder das Bereitstellen eines Aktor-Signals. Bei dem Verfahren wird in einer weiter optionalen Weiterbildung der Erfindung mittels eines Sensors das Sensor-Signal erfasst und dem Auswerten zugeführt und/oder mittels des Aktor-Signals wird ein Aktor angesteuert.

Das erfindungsgemäße System weist eine Automatisierungskomponente mit programmierbarer Automatisierungsfunktionalität auf und ist zur Implementierung einer Automatisierungsfunktionalität auf der Automatisierungskomponente ausgebildet. Dabei umfasst die Automatisierungsfunktionalität eine Sensor-und/oder Aktor-Funktionalität, und das erfindungsgemäße System weist ein Integritätserfassungsmodul auf, welches zur Erfassung einer Integritätsinformation ausgebildet ist, wobei das System ausgebildet ist, abhängig von der Integritätsinformation die Implementierung der Automatisierungsfunktionalität auszuführen. Wie bereits beim erfindungsgemäßen Verfahren beschrieben ist die Integritätserfassungsinformation eine Information über die Integrität der Automatisierungskomponente.

Vorzugswiese ist das erfindungsgemäße System zur Implementierung der Automatisierungsfunktionalität mittels einer Bereitstellung von Automatisierungsdaten ausgebildet, wobei die Bereitstellung der Automatisierungsdaten im Klartext und/oder mittels einer Entschlüsselung bereits vorliegender verschlüsselter Automatisierungsdaten erfolgt.

Das erfindungsgemäße System bildet in einer bevorzugten Weiterbildung der Erfindung eine einstückig und/oder einteilig handhabbare Vorrichtung. In dieser Weiterbildung der Erfindung kann die Vorrichtung selbst die Integritätsinformation der Automatisierungskomponente erfassen. Eine Einbindung einer separaten Vorrichtung ist in dieser Weiterbildung der Erfindung entbehrlich.

Das erfindungsgemäße System umfasst vorteilhaft mindestens einen Aktor und/oder mindestens einen Sensor und ist ausgebildet, mittels der Automatisierungsfunktionalität zumindest ein Sensor-Signal des Sensors auszuwerten und/oder zumindest ein Aktor-Signal für eine Ansteuerung des Aktors bereitzustellen.

Das erfindungsgemäße System ist zweckmäßig ausgebildet, das Verfahren wie vorstehend beschrieben auszuführen.

Die Integritätsinformation der Automatisierungskomponente kann als Runtime-Health-Check-Status-Information vorliegen.

Vorteilhaft ist bei dem erfindungsgemäßen System die Integritätsinformation von einem einzelnen Integritätserfassungsmodul bereitstellbar. Alternativ oder zusätzlich kann sich die Integritätsinformation auch aus der Kombination mehrerer Integritätsinformationen ergeben, die von mehreren Integritätserfassungsmodulen ermittelt werden, die der Automatisierungskomponente jeweils zugeordnet sind. In dieser Weiterbildung der Erfindung ist daher das System ausgebildet, abhängig von der jeweiligen Integritätsinformation jeweils eines Integritätserfassungsmoduls die Implementierung auszuführen. Optional und ebenfalls vorteilhaft können Integritätsinformationen mehrerer Automatisierungskomponenten eines Automatisierungssystems zusammengefasst werden. In dieser Weiterbildung der Erfindung ist es vorzugsweise möglich, dass eine Integritäts-information neben einer ersten Automatisierungskomponente zumindest einer weiteren Automatisierungskomponente berücksichtig werden kann, um zu entscheiden, ob die die Automatisierungsfunktionalität auf der ersten Automatisierungskomponente implementiert werden kann oder nicht.

Vorzugsweise ist das Integritätserfassungsmodul selbst speziell angriffsgeschützt, damit die Vertrauenswürdigkeit der Integritätsinformation gewährleistet ist. Zweckmäßig kann das Integritätserfassungsmodul softwarebasiert in obfuszierter Form oder in verschlüsselter Form vorliegen und während der Ausführung vollständig oder abschnittsweise entschlüsselt werden. Optional und ebenfalls vorteilhaft kann das Integritätserfassungsmodul softwarebasiert auf einem eigenen, separaten, Prozessor und/oder Rechenkern ausgeführt werden. Weiterhin vorteilhaft kann das Integritätserfassungsmodul softwarebasiert auf einem Secure-Element, insbesondere in einer vertrauenswürdigen Ausführungsumgebung, auch als (engl.) "Trusted Execution Environment" oder kurz TEE bezeichnet ausgeführt werden. Ein solches TEE ist insbesondere ein Intel SGX oder eine ARM TrustZone oder mittels eines ansteckbaren Erweiterungsmoduls oder einer Einsteckkarte, wie vorzugsweise einer PCIe-Karte, realisiert.

Zudem optional und ebenfalls vorteilhaft können bei der offenen Compute-Plattform oder deren Geräte-Management vorzugsweise Security-Maßnahmen zur Erfüllung vorgebbarer Mindest-Security-Voraussetzungen vorgesehen sein, sodass die Vertrauenswürdigkeit der Integritätsinformation gegeben ist. Solche Security-Maßnahmen beziehen sich auf Security im Sinne von "IT-Sicherheit" und beinhalten vorzugsweise eine Konfiguration eines Secure-Boots der Compute-Plattform und/oder eine Deaktivierung oder Deinstallation von nicht benötigten Diensten und Programmen sowie eine restriktive Vergabe von Zugriffsrechten und/oder eine Verwendung von Mandatory-Access-Control-Systemen wie SELinux oder AppArmor oder eines Hypervisors zur Isolation unterschiedlich kritischer Funktionsbereiche.

Nachfolgend wird die Erfindung anhand eines in der Zeichnung dargestellten Ausführungsbeispiels näher erläutert. Es zeigen:
- Fig. 1: ein erstes Ausführungsbeispiel eines Automatisierungssystems mit erfindungsgemäßen Automatisierungskomponenten gemäß einem ersten Ausführungsbeispiel zur Ausführung eines erfindungsgemäßen Verfahrens schematisch in einer Prinzipskizze,
- Fig. 2: ein weiteres Ausführungsbeispiel eines erfindungsgemäßen Automatisierungssystems mit erfindungsgemäßen Automatisierungsgeräten gemäß einem weiteren Ausführungsbeispiel zur Ausführung eines erfindungsgemäßen Verfahrens in einem weiteren Ausführungsbeispiel und
- Fig. 3: das erfindungsgemäße Verfahren schematisch in einem Ablaufdiagramm.

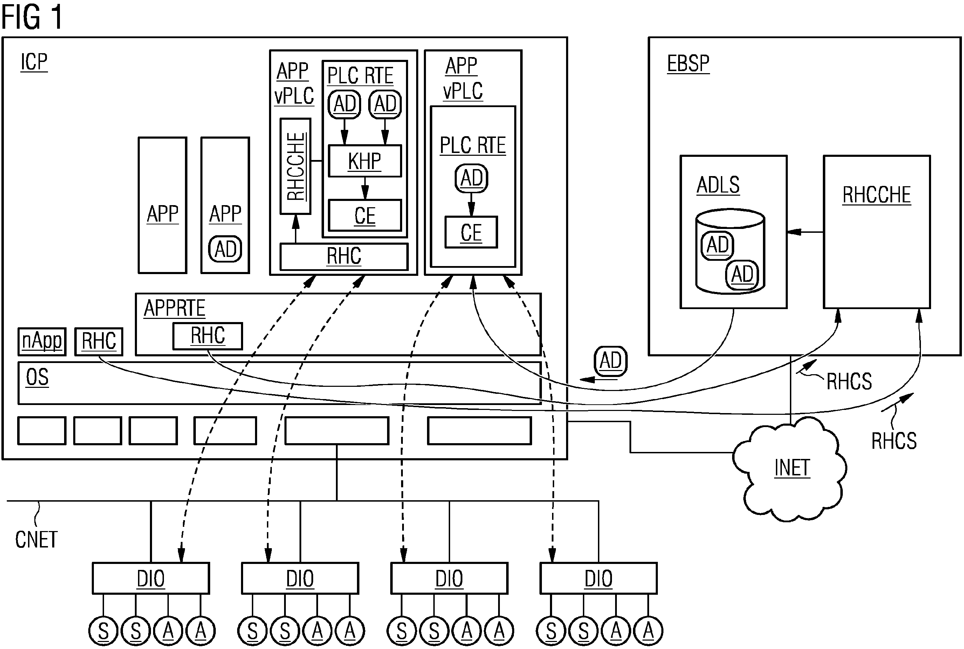

Das in Fig. 1 dargestellte Automatisierungssystem ICP umfasst Automatisierungskomponenten vPLC in Gestalt virtualisierter speicherprogrammierbarer Bausteine, welche jeweils eine Steuerungsfunktionalität übernehmen. Die Automatisierungskomponenten vPLC weisen zur Ausführung der Steuerungsfunktionalität jeweils eine "Control Engine" CE auf. Die Automatisierungskomponenten vPLC übertragen Steuerdaten an dezentrale Ein-Ausgabemodule in Gestalt dezentraler und mittels eines Steuernetzwerks CN angebundener Input-Output-Schnittstellen DIO, mittels derer Sensorsignale von Sensoren S empfangen werden und mittels derer Aktorsignale an Aktoren S übermittelt werden, wobei mittels der Sensoren S physikalische Zustandsdaten eines technischen Systems erfasst werden und über Aktoren A in Abhängigkeit diese Zustandsdaten auf das technische System eingewirkt wird.

Im dargestellten Ausführungsbeispiel handelt es sich bei den Sensoren S beispielsweise um Bilderfassungssensoren und bei den Aktoren A um Aktoren A zur Fertigung, beispielsweise um Bohrer, welche mittels der Bilderfassungssensoren in ihrer Bewegung und Fertigung gesteuert werden. In weiteren Ausführungsbeispielen kann es sich auch um andere Aktoren A und andere Sensoren S handeln.

Die Control Engine CE ermittelt abhängig von Automatisierungsdaten AD und aktuellen Messwerten der Sensoren S und einem entsprechenden gebildeten Prozessabbild Steuerungsaktionen, um über die Aktoren A auf ein technisches System, im dargestellten Ausführungsbeispiel einen Fertigungsteil, bearbeitend einzuwirken. Die Automatisierungskomponenten vPLC sind Apps, die neben weiteren Apps APP, z.B. für Diagnose für eine vorausschauende Wartung, auf einer App-Laufzeitumgebung APPRTE ausgeführt werden. Daneben liegen bei dem Automatisierungssystem ICP auch native Apps nAPP vor, die nicht als APP innerhalb der App-Laufzeitumgebung APPRTE, sondern stattdessen direkt als Prozess durch ein Betriebssystem OS ausgeführt werden. Alternativ und nicht eigens in der Zeichnung dargestellt ist es möglich, dass eine App, insbesondere eine Automatisierungskomponente vPLC in Gestalt eines virtualisierten speicherprogrammierbaren Bausteins oder eines virtualisierten Steuergeräts, als softwarebasierte virtuelle Maschine realisiert ist, die durch einen Hyper-Visor oder durch ein Micro-Kernel-Betriebssystem oder ein Realtime-Betriebssystem ausgeführt wird. Diese softwarebasierte Funktionalität wird auf einer industriellen Compute-Plattform, z.B. einem Industrie-PC, einem Compute-Server oder einer Server-Farm, oder einer Edge-Computing-Plattform, wie z.B. einem 5G-Multiaccess-Edge-Computing-System, ausgeführt.

Zumindest einzelne der Automatisierungskomponenten vPLC können wie in Fig. 1 dargestellt in ihrer Steuerungsfunktionalität durch Automatisierungsdaten AD angepasst werden. Dazu können die Automatisierungsdaten AD beispielsweise einigen Automatisierungskomponenten vPLC von einem Automatisierungsdaten-Lade-Server ADLS an die jeweilige Automatisierungskomponente vPLC übertragen werden. Der Automatisierungsdaten-Lade-Server ADLS ist im dargestellten Ausführungsbeispiel auf einer Edge-Backend-Service-Plattform EBSP, die über ein öffentliches Netzwerk INET an das Automatisierungssystem ICP angebunden ist, realisiert. In einem alternativen, nicht eigens dargestellten Ausführungsbeispiel kann der Automatisierungsdaten-Lade-Server ADLS ein spezieller Engineering-Server sein.

Es sind bei den Automatisierungskomponenten vPLC sowie in der App-Laufzeitumgebung APPRTE und dem Betriebssystem OS jeweils ein Integritätserfassungs-Agent RHC vorgesehen, die jeweils eine Laufzeitintegritätsinformation erfassen. Im dargestellten Ausführungsbeispiel ist der Integritätserfassungs-Agent RHC der Automatisierungskomponenten vPLC beispielsweise in einer der jeweiligen Automatisierungskomponenten vPLC integriert. Die Integritätserfassungs-Agenten RHC überwachen die Laufzeitintegrität des Automatisierungssystems ICP im laufenden Betrieb. Sie können beispielsweise die Integrität der Firmware oder von Software-/Firmware-Komponenten, etwa der Automatisierungskomponente vPLC, des Betriebssystems OS und der App-Laufzeitumgebung APPRTE, wiederholt erfassen. Alternativ oder zusätzlich kann die korrekte Funktionalität von kryptographischen Security-Funktionen, beispielsweise die Funktionalität eines Zufallszahlengenerators sowie einer Verschlüsselungsfunktion und einer Entschlüsselungsfunktion sowie des Berechnens und/oder Prüfens von kryptographischen Prüfsummen oder einer digitalen Signatur oder eines Nachrichtenauthentisierungscodes oder eines kryptographischen Hash-Werts erfasst werden. Folgende weitere Überwachungen können realisiert sein: Ein Überwachen der Zulässigkeit von Speicherzugriffen oder Zugriffen auf Betriebssystem-Ressourcen, Überwachen von API-Aufrufen, Überwachen der Stack-Nutzung, etwa "Stack Canaries", "Shadow Stack", oder eine Überwachung der Heap-Nutzung, beispielsweise "Access after Free", d.h. Zugriff auf einen bereits wieder freigegebenen Speicherbereich, oder ein Überwachen von Sprungbefehlen wie Jump oder Branch, ein Überwachen einer Zeiger-Dereferenzierung von authentisierten Zeigern, ein Überwachen von Interrupts, ein Überwachen von Performance-Countern, Überwachen einer Kontrollflussintegrität ("Control Flow Integrity"), ein Überwachen einer Datenflussintegrität ("Data Flow Integrity"), ein Überwachen eines Zugriffs auf eine Debug-Schnittstelle, beispielsweise JTAG oder RS232, oder ein Überwachen eines Zugriffs auf Geräte-interne Schnittstellen, beispielsweise SPI, I2C, oder PCIe.

Die Integritätserfassungs-Agenten RHC erfassen die einzelnen Integritätsprüf-Informationen RHCS wie zuvor angegeben und fassen das Ergebnis ihrer Erfassung optional in einer globalen Integritätsprüf-Information zusammen. Abhängig von der Integritätserfassungs-Informationen RHCS oder der globalen Integritäts-Information wird die Nutzung von Automatisierungsdaten AD beschränkt oder freigegeben:
Automatisierungskomponenten vPLC können auch selbst Integritätserfassungs-Agenten RHC aufweisen, welche die Integritätsprüf-Information RHCS selbst erfassen und abhängig von dieser Integritätsprüf-Information RHCS ihnen jeweils vorliegenden, bereits empfangenen und verschlüsselt vorliegenden Automatisierungsdaten AD implementieren und verwenden. Dabei werden diese Automatisierungsdaten nur dann entschlüsselt und implementiert und verwendet, wenn die Integritätsprüf-Information RHCS ausreicht. Die Automatisierungsdaten AD weisen beispielsweise eine Rezeptur oder einen Funktionsblock oder ein Step7-Programm, etwa FBS, KOP, AWL, S7 SCL, S7-Graph, S7 Hi-Graph oder S7 CFC, auf. Die Automatisierungsdaten AD, liegen insbesondere als ein geschützter Datenblock vor und sind dabei zusätzlich Know-How-geschützt, d.h. es ist eine Know-How-Schutz-Funktionalität KHP - wie von S7-1500 bekannt - für zumindest diesen einen Datenblock aktiviert. Im dargestellten Ausführungsbeispiel ist als Teil des Know-How-Schutzes eine Information zur geforderten Integritätsprüf-Information RHCS eincodiert. Der Datenblock mit den Automatisierungsdaten AD wird nur dann implementiert, d.h. zur Verwendung vorgesehen, wenn die jeweilige Automatisierungskomponente vPLC, welche die Automatisierungsdaten AD implementieren soll, oder das der jeweiligen Automatisierungskomponente vPLC unterliegende Basissystem, wie etwa das Betriebssystem OS oder die App-Laufzeitumgebung APPRTE, die geforderte Integritätsprüf-Information entsprechend der in den Datenblock eincodierten Information erfüllt. Die Automatisierungsdaten AD können dabei den Datenblock mit aktiviertem Know-How-Schutz bilden oder zumindest aufweisen. Die Prüfung, ob die Integritätsprüf-Information RHCS der in den Datenblock eincodierten Information entspricht, erfolgt mit einem Integritätsprüf-Modul RHCCHE, welches die Integritätsprüfinformation RHCS mit der eincodierten Information RHCS vergleicht. Sowohl das Integritätsprüf-Modul RHCCHE als auch die Know-how-Schutz-Funktionalität KHP als auch die jeweiligen Automatisierungsdaten AD sind dabei in einer Laufzeitumgebung PLC RTE der Automatisierungskomponente vPLC vorgesehen.

Alternativ oder zusätzlich kann auch der Automatisierungsdaten-Lade-Server ADLS, der beispielsweise Automatisierungsdaten AD an einzelne Automatisierungskomponenten vPLC bereitstellt, d. h. an sie überträgt, die Integritätsprüf-Information RHCS der betreffenden Automatisierungskomponente vPLC und/oder des darunterliegenden Basissystems wie etwa des Betriebssystems OS oder der App-Laufzeitumgebung APPRTE prüfen. Dazu wird zumindest eine von dem Integritätserfassungs-Agenten RHC ermittelte Integritätsprüf-Information oder eine davon abgeleitete Information an den Automatisierungsdaten-Lade-Server ADLS übertragen. Der Automatisierungsdaten-Lade-Server ADLS weist selbst ein Integritätsprüf-Modul RHCCHE auf, welches prüft, ob die Integritätsprüf-Information RHCS die für die Automatisierungsdaten AD geforderte Integritätsprüf-Information erfüllt, indem es die Integritätsprüf-Modul RHCCHE mit der geforderten Integritätsprüf-Information vergleicht. Nur dann, wenn die Integritätsprüf-Information RHDS die für die Automatisierungsdaten AD geforderte Integritätsprüf-Information erfüllt, werden die Automatisierungsdaten AD durch den Automatisierungsdaten-Lade-Server ADLS der jeweiligen Automatisierungskomponente vPLC bereitgestellt oder es wird ein kryptographischer Schlüssel zum Entschlüsseln von verschlüsselten Automatisierungsdaten AD bereitgestellt. Die dem Lade-Server bereitgestellte Integritätsprüf-Information RHCS kann unmittelbar vom Integritätserfassungs-Agenten RHC gebildet werden oder indirekt über einen Proxy, der zur Integritätsprüfung herangezogene Rohdaten vorverarbeitet.

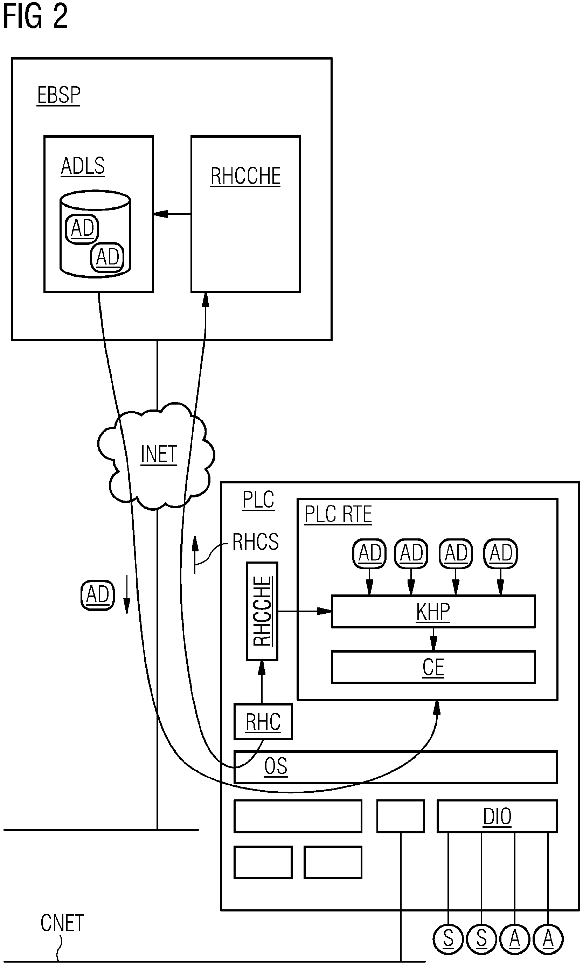

Bei dem in Fig. 2 dargestellten Ausführungsbeispiel ist die Automatisierungskomponente PLC hardwarebasiert. Beispielsweise sind Aktoren A und Sensoren S direkt an die Automatisierungskomponente PLC angebunden. Die Automatisierungskomponente PLC weist selbst einen Integritätserfassungs-Agenten RHC auf, der die Laufzeitintegrität der Automatisierungskomponente PLC im laufenden Betrieb überwacht.

Im dargestellten Ausführungsbeispiel verwendet, d. h. entschlüsselt, die Automatisierungskomponente PLC die empfangenen Automatisierungsdaten AD nur, wenn der Integritätserfassungs-Agent RHC eine Integritätsprüf-Information RHCS ermittelt, die zu der für die jeweils geladenen Automatisierungsdaten AD geforderte Integritätsprüf-Information passt. Entsprechend können wie oben zum vorhergehenden Ausführungsbeispiel beschrieben die Automatisierungsdaten AD durch einen Datenblock mit aktiviertem Know-How-Schutz gegeben sein oder einen solchen Block enthalten. Auch in dem Ausführungsbeispiel der Figur 2 ist also eine Know-how-Schutz-Funktionalität KHP vorgesehen. In dem Datenblock mit aktiviertem Know-How-Schutz kann die Information zu der geforderten Integritätsprüf-Information RHCS enthalten sein. Der entsprechende Datenblock wird nur aktiviert bzw. entschlüsselt, wenn der Integritätserfassungs-Agent RHC der jeweiligen Automatisierungskomponente PLC die geforderte Integritätsprüf-Information ermittelt. Auch in dem in Fig. 2 dargestellten Ausführungsbeispiel wird die vom Integritätserfassungs-Agenten RHC erfasste Integritätsprüf-Information RHCS mittels eines Integritätsprüf-Moduls RHCCHE geprüft. Auch im in Fig. 2 dargestellten Ausführungsbeispiel sind das Integritätsprüf-Modul RHCCHE sowie die Know-how-Schutz-Funktionalität KHP als auch die jeweiligen Automatisierungsdaten AD in einer Laufzeitumgebung PLC RTE der Automatisierungskomponente PLC vorgesehen.

Alternativ ist es in einem weiteren, nicht eigens dargestellten Ausführungsbeispiel, welches im Übrigen dem in Fig. 2 dargestellten Ausführungsbeispiel entspricht, möglich, dass die Automatisierungsdaten AD oder ein zum Entschlüsseln von verschlüsselten Automatisierungsdaten AD benötigter Schlüssel von einem Automatisierungsdaten-Lade-Server ADLS nur dann der Automatisierungskomponente PLC bereitgestellt wird oder werden, wenn die Automatisierungskomponente PLC die geforderte Integritätsprüf-Information erfüllt. Dazu überträgt die Automatisierungskomponente PLC die von ihrem Integritätserfassungs-Agenten RHC ermittelte Integritätsprüf-Information RHCS an den Automatisierungsdaten-Lade-Server ADLS. Der Automatisierungsdaten-Lade-Server ADLS übermittelt die Daten dann, wenn die ermittelte Integritätsprüf-Information RHCS eine hinreichende Integrität der Automatisierungskomponente PLC angibt.

In den gezeigten Ausführungsbeispielen können die Integritätserfassungs-Agenten RHC und/oder die Integritätsprüf-Module RHCCHE softwarebasiert auf einem Secure-Element, insbesondere in einer vertrauenswürdigen Ausführungsumgebung, auch als (engl.) "Trusted Execution Environment" oder kurz TEE bezeichnet, ausgeführt werden. Ein solches TEE ist beispielsweise ein Intel SGX oder eine ARM TrustZone oder ein ansteckbares Erweiterungsmodul oder eine Einsteckkarte, beispielsweise eine PCIe-Karte.

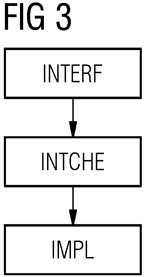

In Fig. 3 ist das erfindungsgemäße Verfahren noch einmal kompakt zusammengefasst: Wie oben beschrieben wird in einem ersten Erfassungsschritt INTERF jeweils die Integritätsprüf-Information der Ausführungsumgebung des Automatisierungskomponente erfasst. Anschließend wird in einem Prüfschritt INT-CHE die Integritätsprüf-Information auf eine Vorgabe für die Integritätsprüf-Information geprüft. Genügt die Integritätsprüf-Information der Vorgabe, so wird auf der Automatisierungskomponente die Automatisierungsfunktionalität mittels eines Implementierungsschritts IMPL implementiert.

## Patentansprüche

1. Verfahren zur Implementierung einer Automatisierungsfunktionalität (AD) auf einer Automatisierungskomponente (vPLC, PLC) mit programmierbarer Automatisierungsfunktionalität, bei welchem die Automatisierungsfunktionalität eine Sensor-und/oder Aktor-Funktionalität umfasst, wobei bei dem Verfahren eine Integritätsinformation (RHCS) der Automatisierungskomponente (vPLC, PLC), welche eine Information über die Integrität der Automatisierungskomponente (vPLC, PLC) enthält, erfasst (INTERF) wird und bei welchem abhängig von der Integritätsinformation (RHCS) die Implementierung ausgeführt (IMPL) wird.

2. Verfahren nach Anspruch 1, bei welchem die Implementierung der Automatisierungsfunktionalität mittels einer Bereitstellung von Automatisierungsdaten (AD) erfolgt und bei welchem die Bereitstellung der Automatisierungsdaten (AD) im Klartext und/oder mittels einer Entschlüsselung bereits vorliegender verschlüsselter Automatisierungsdaten erfolgt.

3. Verfahren nach einem der vorhergehenden Ansprüche, bei welchem die Automatisierungskomponente (PLC) eine Hardwarekomponente ist.

4. Verfahren nach einem der vorhergehenden Ansprüche, bei welchem die Automatisierungskomponente eine virtualisierte Softwarekomponente (vPLC) ist.

5. Verfahren nach einem der vorhergehenden Ansprüche, bei welchem die Automatisierungsfunktionalität das Auswerten eines Sensor-Signals und/oder das Bereitstellen eines Aktor-Signals umfasst.

6. Verfahren nach dem vorhergehenden Anspruch, bei welchem mittels eines Sensors (S) das Sensor-Signal erfasst wird und dem Auswerten zugeführt wird und/oder mittels des Aktor-Signals ein Aktor angesteuert wird.

7. System mit einer Automatisierungskomponente (vPLC, PLC) mit programmierbarer Automatisierungsfunktionalität, ausgebildet zur Implementierung einer Automatisierungsfunktionalität auf der Automatisierungskomponente (vPLC, PLC), wobei die Automatisierungsfunktionalität eine Sensor- und/oder Aktor-Funktionalität umfasst, aufweisend ein Integritätserfassungsmodul (RHC), welches zur Erfassung (INTERF) einer Integritätsinformation (RHCS) ausgebildet ist und wobei das System ausgebildet ist, abhängig von der Integritätsinformation (RHCS) die Implementierung der Automatisierungsfunktionalität auszuführen (IMPL).

8. System nach dem vorhergehenden Anspruch, welches zur Implementierung der Automatisierungsfunktionalität mittels einer Bereitstellung von Automatisierungsdaten (AD) ausgebildet ist, wobei die Bereitstellung der Automatisierungsdaten (AD) im Klartext und/oder mittels einer Entschlüsselung bereits vorliegender verschlüsselter Automatisierungsdaten (AD) erfolgt.

9. System nach einem der vorhergehenden Ansprüche, welches eine einstückig und/oder einteilig handhabbare Vorrichtung bildet.

10. System nach einem der vorhergehenden Ansprüche, umfassend mindestens einen Aktor (A) und/oder mindestens einen Sensor (S), wobei das System ausgebildet ist, mittels der Automatisierungsfunktionalität zumindest ein Sensor-Signal des Sensors (S) auszuwerten und/oder zumindest ein Aktor-Signal für eine Ansteuerung des Aktors (A) bereitzustellen.

11. System nach einem der vorhergehenden Ansprüche, welches ausgebildet ist, das Verfahren nach einem der vorhergehenden Ansprüche auszuführen.
